# EUROPÄISCHE PATENTSCHRIFT

(11) **EP 1 136 636 B1**
(45) Veröffentlichungstag und Bekanntmachung des Hinweises auf die Patenterteilung: **02.06.2004**
(21) Anmeldenummer: 01106518.2
(22) Anmeldetag: 15.03.2001
(51) Int. Cl.: E04G 9/02, B27N 7/00

(54) **Holzpartikelplatte, insbesondere Schalungsplatte**
Wood particle board, in particular a formwork panel
Panneaux de bois, en particulier un panneau de coffrage

(30) Priorität: 24.03.2000 DE 10014789; 12.09.2000 DE 20015725 U
(43) Veröffentlichungstag der Anmeldung: 26.09.2001
(73) Patentinhaber: KRONOTEC AG, 6006 Luzern (CH)
(72) Erfinder: Bitzi, Johann, 6130 Willisau (CH); Haupt, Klaus, 18320 Schlemmin (DE); Hasch, Joachim, 12055 Berlin (DE); Moll, Joachim, 18311 Ribnitz-Damgarten (DE); Stadelmann, Rene, 6010 Kriens (CH); Schwarz, Heinz, D-18311 Ribnitz-Damgarten (DE)
(74) Vertreter: Rehmann, Thorsten, Dipl.-Ing.

(56) Entgegenhaltungen:
- DE-A- 4 439 271
- DE-A- 19 700 138
- DE-U- 29 904 919
- US-A- 5 470 631
- US-A- 5 506 026
- US-A- 6 010 793

## Beschreibung

Die Erfindung betrifft eine Holzpartikelplatte, insbesondere Schalungsplatte, mit einem aus OSB (Oriented Strands Board) gebildeten Kern und einer beidseitigen Beschichtung aus mit Phenolharz imprägniertem Papier.

Die DE -A- 197 00 138 offenbart eine im Grundriss rechteckige Schalungsplatte, insbesondere Großflächen-Schalungsplatte für Schalungssysteme des Stahlbetonbaus, in Form einer nahtlosen, einteiligen Holzwerkstoffplatte. Hierzu wird ein aus OSB gebildeter Kern verwendet, mit der Maßgabe, dass die OSB in zumindest fünf Holzpartikellagen gestreut und verpresst ist. Von Lage zu Lage weist sie sich kreuzende, abwechselnd in Längsrichtung sowie in Querrichtung des Grundrisses verlaufende Strands auf. Beidseitig auf den OSB-Kern kann eine Phenolharzbeschichtung bzw. eine Beschichtung aus mit Phenolharz imprägnierten Papieren vorgesehen sein.

OSB-Platten zeigen insbesondere in der Verwendung als Schalungsplatten des Stahlbetonbau Eigenschaften, die überraschenderweise beim Vergleich zu bekannten Ausführungsformen aus Spanplatten oder Sperrholz zu einer beachtlich höhere Standzeit führen.

Da die Strands einer OSB gegenüber den zu einer Spanplatte verarbeiteten Spänen sehr groß sind, weist die eingangs beschriebene OSB den Nachteil auf, dass ihre Oberfläche nicht ganz plan ist. Wird nun eine Schalung aus OSB-Platten aufgebaut, ist es durchaus möglich, dass sich die Unebenheit der Schalungsplatte in den Beton überträgt und nach dem Aushärten des Betons sichtbar ist, was vielfach unerwünscht ist.

Die erläuterte Holzpartikelplatte kann beispielsweise auch als Wagenboden eingesetzt werden. Die in der Oberfläche vorhandenen Unebenheiten führen dazu, dass die Reinigung des Wagenbodens erschwert wird und sich Schmutznester bilden können.

Bei der Herstellung einer OSB-Platte kann sich aufgrund der relativ groben Schnitzel an der Oberfläche keine glatte Oberflächenstruktur einstellen. Durch das Verhalten der Langschnitzel ergibt sich eine relativ chaotische Struktur der Oberfläche, in der sich die Schnitzel teilweise senkrecht nach oben stellen, so dass mit dem Auflegen der vorverdichteten oberen Deckschicht die Gefahr besteht, dass diese senkrecht nach oben stehende Langschnitzel aufsteigen. In der DE 44 39 271 A1 ist ein Verfahren beschrieben, mit dem dieses Aufsteigen der Langschnitzel in die Deckschicht dadurch verhindert werden soll, dass eine obere Feingutdeckschicht auf den Kern aufgebracht wird. Diese Feingutschicht muss relativ dick sein, damit das Aufsteigen der Langschnitzel wirksam verhindert wird.

Die US -A- 5,470,631 offenbart eine mehrlagig gestreute OSB-Platte, bei der der Kern mit großen Strands gestreut ist, auf die eine Schicht kleinerer Strands gestreut wird und als Deckschicht eine Faserplatte verwendet wird.

Von dieser Problemstellung ausgehend, soll die eingangs beschriebene Holzpartikelplatte verbessert werden.

Die Problemlösung erfolgt bei einer gattungsgemäßen Holzpartikelplatte dadurch, dass zwischen dem Kern und der Papierschicht eine Schicht feine Späne oder Fasern zum Ausfüllen der Unebenheiten im Kern ein weiterer Füllstoff auf Basis von Acylaten oder Phenol zum Ausfüllen von Unebenheiten in der Schicht aus feinen Spänen oder Fasern aufgebracht ist.

Abhängig von dem Feinheitsgrad der Späne oder der Fasern kann die Ebenheit der Oberfläche eingestellt werden. Als Späne oder Fasern kommen solche in Betracht, die auch als Deckschicht bei der herkömmlichen Spanplattenfertigung Verwendung finden.

Vorzugsweise ist der Kern beidseitig mit einer Späne- oder Faserschicht und einen weiteren Füllstoff beschichtet, was die Handhabung der Platte, insbesondere als Schalungsplatte vereinfacht, da sie beidseitig verwendbar sind.

Um die Planheit der Oberfläche zu erhöhen ist es vorteilhaft, wenn die Schicht aus feinen Spänen oder Fasern geschliffen ist.

Um die Sichtfläche des zu gießenden Betons ansprechend gestalten zu können, kann das mit Phenolharz imprägnierte Papier eine strukturierte oder glatte Oberfläche aufweisen.

Zur Erhöhung der Lebensdauer der Platte ist es vorteilhaft, wenn die Seitenkanten des Kerns mit einer wasserabsperrenden Schicht versehen sind. Insbesondere bei der Verwendung als Schalungsplatte wird damit ein Eindringen von Feuchtigkeit in den Kern und damit ein Aufquellen des Materials vermieden. Der Kern kann drei- oder fünflagig ausgebildet sein.

Die Rohdichte des Kerns beträgt vorzugsweise 550 bis 790 kg/m³. Das Phenolharz imprägnierte Papier weist vorzugsweise eine Rohflächendichte von 60 bis 80 g/m² auf und wird insbesondere vorzugsweise mit einem Phenolharz auf eine Flächendichte von 200 g/m² imprägniert.

Der Füllstoff wird vorzugsweise in flüssiger Form aufgetragen und härtet anschließend aus.

Die Oberflächengüte wird weiter verbessert, wenn der Füllstoff mit einem Streckmittel gestreckt ist. Als Streckmittel kommen insbesondere Weizenmehl, Kokosmehl und/oder Kreide in Betracht.

Ein Verfahren zur Herstellung der erfindungsgemäßen Holzpartikelplatte zeichnet sich dadurch aus, dass die Phenolpapiere mit einem Phenolharz imprägniert werden und unter Druck und erhöhter Temperatur mit dem Kern verbunden werden, wobei die Presstemperatur zwischen 140°C und 160°C und die Presszeit zwischen 1,0 Minuten und 2,5 Minuten liegt.

Die Späne- oder Faserschicht wird auf den OSB-Kern vor dem Pressvorgang auf einer Conti-Presse aufgebracht, so dass der Kern mit der später schleifbaren Schicht in einem Arbeitsgang hergestellt wird.

Um Hohlstellen (Unebenheiten) in der Schicht aus feinen Spänen oder Fasern auszufüllen, wird der Füllstoff in einer Menge von 5 g/m² bis 100 g/m² auf die geschliffene Schicht aufgebracht. Der Füllstoff kann durch Walzen oder Gießen aufgetragen werden. Anschließend wird das Phenolharz imprägnierte Papier auf den flüssigen Füllstoff aufgelegt und es wird eine Aushärtung unter Druck bei einer Presstemperatur zwischen 130°C und 160°C und einer Presszeit zwischen 1 Minute und 3 Minuten eingeleitet.

Durch das Ausfüllen restlicher Unebenheiten in der Schicht aus feinen Spänen oder Fasern wird die Holzpartikelplatte weiter veredelt. Insbesondere, wenn sie als Schalungsplatte verwendet wird, hat die Glätte der erzeugten Oberfläche natürlich einen besonderen Einfluss auf die Oberfläche des ausgehärteten Betons, und es ist positiv, wenn keine Negativabdrücke nach dem Ausschalen zu sehen sind. Durch die Veredelung steigt außerdem die Biegefestigkeit, die Dimensionsstabilität und nicht zuletzt durch die zusätzliche Kunststoffschicht auch die Feuchteversiegelung.

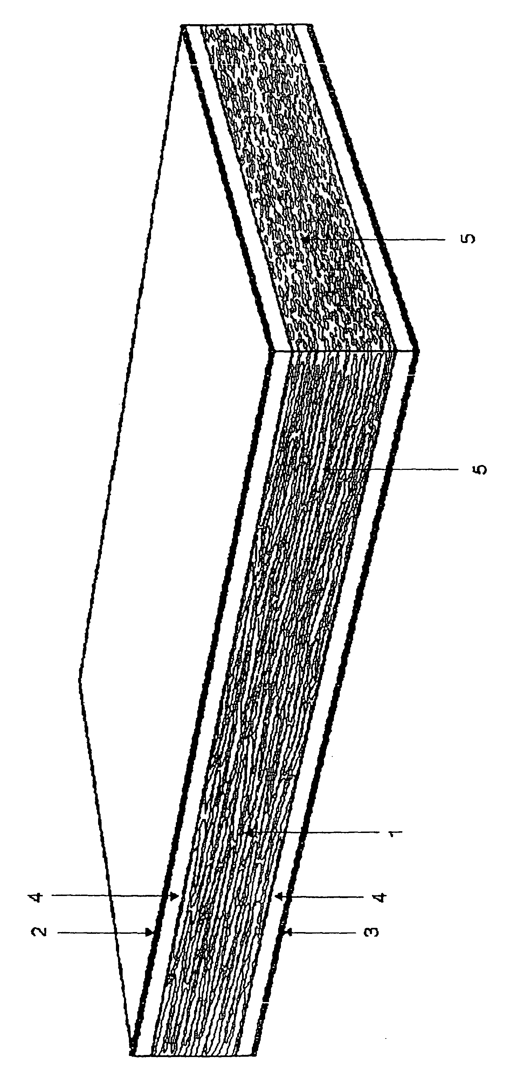

Anhand der beigefügten Zeichnung, die eine perspektivische Ansicht einer Holzpartikelplatte zeigt, soll ein Ausführungsbeispiel der Erfindung näher erläutert werden.

Die Holzpartikelplatte kann als Schalungsplatte oder in einteiliger Form als Wagenboden Verwendung finden. Sie besteht aus einem OSB-Kern 1, der drei- oder fünflagig gestreut ist. Von Lage zu Lage kreuzen sich die OSB-Strands 5 in Längsrichtung sowie in Querrichtung. Die Strands 5 weisen eine Länge von 70 bis 200 mm, eine Breite von 6 bis 30 mm und eine Dicke von 0,3 bis 1,2 mm auf. Als Material wird Nadelholz oder Laubholz verwendet, wobei der Holzanteil in der fertigen Platte zwischen 90 % und 98 % liegt. Auf den OSB-Kern 1 ist beidseitig eine Beschichtung aus Phenolpapier 2, 3 aufgebracht. Das Phenolpapier 2, 3 besitzt eine Rohflächendichte von 60 bis 80 g/m² und wird mit einem Phenolharz auf eine Flächendichte von 200 g/m² imprägniert.

Zwischen der Papierschicht 2, 3 und dem Kern 1 ist eine Faser- oder Späneschicht 4 eingebracht, die Unebenheiten der Oberfläche des Kerns 1 ausgleicht. Um eine möglichst plane Oberfläche zu erzielen, ist die Späne- oder Faserschicht 4 nach dem Aufbringen geschliffen.

Diese Feindeckschicht 4 besteht aus einem Holz-Feinstmaterial, das nach einer Siebmaschenweite, die kleiner als 0,5 mm ist, erhalten wurde. Je feiner die Späne der Schicht 4 sind, umso hochwertiger ist die Planheit der Oberfläche des Kerns 1.

Auf die geschliffene Schicht 4 kann ein Füllstoff auf Basis von Acylaten oder Phenol zum Ausfüllen von Rest-Unebenheiten in der Späne- oder Faserschicht 4 aufgebracht werden. Der Füllstoff wird durch Walzen oder Gießen in flüssiger Form aufgetragen und härtet später aus. Der Füllstoff kann mit einem Streckmittel gestreckt sein, wobei sich insbesondere Weizenmehl oder Kokosmehl und/oder Kreide hierzu eignen.

Die Phenolpapiere 2, 3 können glatt oder strukturiert sein. Mit einer strukturierten Oberfläche lassen sich die Sichtflächen des gegossenen Betons optisch beeinflussen.

Die Schnittkanten der fertigen Holzpartikelplatte werden mit einer wasserabsperrenden Schutzsicht versiegelt, so dass die feuchte Aufnahme des Holzwerkstoffs behindert bzw. verzögert wird. Als Versiegelung eignen sich Werkstoffe auf Basis von Polyurethan bzw. Acrylate, die im kontinuierlichen Verfahren aufgebracht werden.

Die Rohdichte des Kernes 1 beträgt 550 bis 790 k/m³. Die Rohflächendichte der Phenolpapiere 2, 3 beträgt etwa 60 bis 80 g/m² und wird durch eine Imprägnierung mit Phenolharz auf 200 g/m² erhöht.

Die Orientierung der Strands 5 ist vorwiegend in einer Richtung, wobei diese in der Regel nicht parallel zueinanderliegen. Die Beschichtung des Kernes 1 mit den Phenolpapieren 2, 3 erfolgt mit Kurztaktpressen. Durch eine geeignete Imprägnierung des Phenolpapiers mit dem Phenolharz wird es möglich, dass unter Druck und Hitze ein Fließen des Kerns erreicht wird und damit eine Klebung zwischen dem Phenolpapier 2, 3 und dem Kern 1 erreicht wird. Die Presstemperatur liegt vorzugsweise zwischen 140 °C und 160 °C bei einer Presszeit zwischen 1,0 Minuten und 2,5 Minuten. Um die Plastifizierung zu erreichen, können Aminoplaste, Phenoplaste oder polymere MDI sowie Mischharze aus Amino- und Phenoplasten verwendet werden.

Nachdem die Späne- oder Faserschicht 4 mit einem (in der Zeichnung nicht weiter dargestellten) Füllstoff beschichtet wurde, um die Oberflächengüte zu verbessern, wird das Phenolpapier 2, 3 auf den flüssigen Füllstoff, der in einer Menge von 5 g/m² bis 100 g/m² aufgewalzt oder aufgegossen wurde, aufgelegt. Anschließend erfolgt eine direkte Verpressung von Füllstoff und Phenolpapier 2, 3 in einer Kurztaktpresse bei einer Presstemperatur zwischen 130°C und 160°C sowie einer Presszeit zwischen 1 Minute und 3 Minuten.

## Patentansprüche

1. Holzpartikelplatte, insbesondere Schalungsplatte, mit einem aus OSB (Oriented Strands Board) gebildeten Kern (1) und einer beidseitigen Beschichtung aus mit Phenolharz imprägniertem Papier (2, 3) **dadurch gekennzeichnet, dass** zwischen dem Kern (1) und dem Papier (2, 3) eine Schicht (4) feine Späne oder Fasern zum Ausfüllen von Unebenheiten im Kern (1) und auf diese Schicht (4) ein weiterer Füllstoff auf Basis von Acylaten oder Phenol zum Ausfüllen von Unebenheiten in der Schicht (4) aus feinen Spänen oder Fasern aufgebracht ist.

2. Holzpartikelplatte nach Anspruch 1, **dadurch gekennzeichnet, dass** der Kern (1) beidseitig mit einer Schicht (4) feiner Späne oder Fasern und einem weiteren Füllstoff beschichtet ist.

3. Holzpartikelplatte nach Anspruch 2, **dadurch gekennzeichnet, dass** die Oberfläche der Schicht (4) feiner Späne oder Fasern (4) zur Ausbildung einer planen Ebene geschliffen ist.

4. Holzpartikelplatte nach Anspruch 3, **dadurch gekennzeichnet, dass** das mit Phenolharz imprägnierte Papier (2, 3) eine strukturierte Oberfläche aufweist.

5. Holzpartikelplatte nach einem oder mehreren der vorstehenden Ansprüche, **dadurch gekennzeichnet, dass** die Seitenkanten (5) des Kerns (1) mit einer wasserabsperrenden Schicht versehen sind.

6. Holzpartikelplatte nach Anspruch 1, **dadurch gekennzeichnet, dass** der Kern (1) 3- oder 5-lagig ausgebildet ist.

7. Holzpartikelplatte nach Anspruch 1, **dadurch gekennzeichnet, dass** die Rohdichte des Kerns (1) 550 bis 790 kg/m³ beträgt.

8. Holzpartikelplatte nach Anspruch 1, **dadurch gekennzeichnet, dass** das Papier (2, 3) eine Rohflächendichte von 60 bis 80 g/m² aufweist.

9. Holzpartikelplatte nach Anspruch 8, **dadurch gekennzeichnet, dass** das Papier (2, 3) mit einem Phenolharz auf eine Flächendichte von 200 g/m² imprägniert ist.

10. Holzpartikelplatte nach Anspruch 1, **dadurch gekennzeichnet, dass** der Füllstoff aushärtbar ist und in flüssiger Form auftragbar ist.

11. Holzpartikelplatte nach Anspruch 1 oder 10, **dadurch gekennzeichnet, dass** der Füllstoff mit einem Streckmittel gestreckt ist.

12. Holzpartikelplatte nach Anspruch 11, **dadurch gekennzeichnet, dass** als Streckmittel Weizenmehl oder Kokosmehl und/oder Kreide verwendet wird.

13. Verfahren zur Herstellung einer Holzpartikelplatte nach einem oder mehreren der Ansprüche 10 bis 12, **dadurch gekennzeichnet, dass** der Füllstoff in einer Menge von 5 g/m² bis 100 g/m² aufgetragen wird.

14. Verfahren nach Anspruch 13, **dadurch gekennzeichnet, dass** der Füllstoff durch Walzen oder Gießen aufgetragen wird.

15. Verfahren nach Anspruch 13, **dadurch gekennzeichnet, dass** das Papier (2, 3) auf den flüssigen Füllstoff aufgelegt wird und anschließend eine Aushärtung unter Druck und erhöhter Temperatur eingeleitet wird.

## Claims

1. Wood particle board, in particular shuttering board, having a core (1) formed of OSB (oriented strand board) and a coating on both sides of paper (2, 3) impregnated with phenolic resin, **characterized in that,** between the core (1) and the paper (2, 3) there is applied a layer (4) of fine chips or fibres in order to fill up irregularities in the core (1) and, on this layer (4), a further filler based on acrylates or phenol in order to fill up irregularities in the layer (4) of fine chips or fibres.

2. Wood particle board according to Claim 1, **characterized in that** the core (1) is coated on both sides with a layer (4) of fine chips or fibres and a further filler.

3. Wood particle board according to Claim 2, **characterized in that** the surface of the layer (4) of fine chips or fibres (4) is ground in order to form a flat plane.

4. Wood particle board according to Claim 3, **characterized in that** the paper (2, 3) impregnated with phenolic resin has a structured surface.

5. Wood particle board according to one or more of the preceding claims, **characterized in that** the side edges (5) of the core (1) are provided with a water barrier layer.

6. Wood particle board according to Claim 1, **characterized in that** the core (1) is formed with three or five layers.

7. Wood particle board according to Claim 1, **characterized in that** the bulk density of the core (1) is 550 to 790 kg/m³.

8. Wood particle board according to Claim 1, **characterized in that** the paper (2, 3) has a raw surface density of 60 to 80 g/m².

9. Wood particle board according to Claim 8, **characterized in that** the paper (2, 3) is impregnated with a phenolic resin to a surface density of 200 g/m².

10. Wood particle board according to Claim 1, **characterized in that** the filler can be cured and can be applied in liquid form.

11. Wood particle board according to Claim 1 or 10, **characterized in that** the filler is extended with an extender.

12. Wood particle board according to Claim 11, **characterized in that** the extender used is wheat flour or cocoa flour and/or chalk.

13. Process for the production of a wood particle board according to one or more of Claims 10 to 12, **characterized in that** the filler is applied in an amount of 5 g/m² to 100 g/m².

14. Process according to Claim 13, **characterized in that** the filler is applied by rolling or casting.

15. Process according to Claim 13, **characterized in that** the paper (2, 3) is laid on the liquid filler and curing under pressure and elevated temperature is subsequently initiated.

## Revendications

1. Panneau de particules de bois, en particulier panneau de coffrage, comprenant une âme (1) constituée d'un OSB (Oriented Strands Board ≈ Panneau à filaments orientés) et d'un revêtement de chaque côté en papier (2,3) imprégné de résine phénolique, **caractérisé en ce qu'**entre l'âme (1) et le papier (2,3) est posée une couche (4) de fins copeaux ou fibres pour combler les inégalités de l'âme (1), et sur cette couche (4) un autre matériau de remplissage à base d'acylatène ou de phénol pour combler les irrégularités dans la couche (4) de fins copeaux ou fibres.

2. Panneau de particules de bois selon la revendication 1, **caractérisé en ce que** l'âme (1) est revêtue des deux côtés avec une couche (4) de fins copeaux ou fibres et d'un autre matériau de remplissage.

3. Panneau de particules de bois selon la revendication 2, **caractérisé en ce que** la surface de la couche (4) de fins copeaux ou fibres (4) est polie pour la réalisation d'un plan lisse.

4. Panneau de particules de bois selon la revendication 3, **caractérisé en ce que** le papier (2, 3) imprégné de résine phénolique présente une surface structurée.

5. Panneau de particules de bois selon une ou plusieurs des revendications précédentes, **caractérisé en ce que** les bords latéraux (5) de l'âme (1) sont munis d'une couche de barrage contre l'eau.

6. Panneau de particules de bois selon la revendication 1, **caractérisé en ce que** l'âme (1) est réalisée à 3 ou 5 couches.

7. Panneau de particules de bois selon la revendication 1, **caractérisé en ce que** la densité brute de l'âme (1) est de 550 à 790 kg/m³

8. Panneau de particules de bois selon la revendication 1, **caractérisé en ce que** le papier (2, 3) présente un grammage brut de 60 à 80 g/m².

9. Panneau de particules de bois selon la revendication 8, **caractérisé en ce que** le papier (2, 3) est imprégné d'une résine phénolique pour atteindre un grammage de 200 g/m².

10. Panneau de particules de bois selon la revendication 1, **caractérisé en ce que** la matière de remplissage est durcissable et peut être posée sous forme liquide.

11. Panneau de particules de bois selon la revendication 1 ou 10, **caractérisé en ce que** la matière de remplissage est allongée avec un extendeur.

12. Panneau de particules de bois selon la revendication 11, **caractérisé en ce qu'**on utilise comme extendeur de la farine de blé ou de la farine de coco et/ou de la craie.

13. Procédé pour fabriquer un panneau de particules de bois selon une ou plusieurs des revendications 10 à 12, **caractérisé en ce que** la matière de remplissage est mise en quantité allant de 5g/m² à 100g/m².

14. Procédé selon la revendication 13, **caractérisé en ce que** la matière de remplissage est passée au rouleau ou coulée.

15. Procédé selon la revendication 13, **caractérisé en ce que** le papier (2, 3) est posé sur la matière de remplissage liquide puis on initie un durcissement sous pression et sous température accrue.
